# EUROPÄISCHE PATENTSCHRIFT

(11) **EP 1 917 589 B1**
(45) Veröffentlichungstag und Bekanntmachung des Hinweises auf die Patenterteilung: **02.12.2009**
(21) Anmeldenummer: 06778021.3
(22) Anmeldetag: 27.07.2006
(51) Int. Cl.: G06F 11/16

(54) **VERFAHREN UND VORRICHTUNG ZUM VERGLEICH VON DATEN BEI EINEM RECHNERSYSTEM MIT WENIGSTENS ZWEI AUSFÜHRUNGSEINHEITEN**
METHOD AND DEVICE FOR COMPARING DATA IN A COMPUTER SYSTEM COMPRISING AT LEAST TWO EXECUTION UNITS
PROCEDE ET DISPOSITIF POUR COMPARER DES DONNEES, POUR UN SYSTEME INFORMATIQUE COMPORTANT AU MOINS DEUX UNITES D'EXECUTION

(30) Priorität: 08.08.2005 DE 102005037217
(43) Veröffentlichungstag der Anmeldung: 07.05.2008
(73) Patentinhaber: ROBERT BOSCH GMBH, 70442 Stuttgart (DE)
(72) Erfinder: WEIBERLE, Reinhard, 71665 Vaihingen/Enz (DE); MUELLER, Bernd, 70839 Gerlingen (DE); BOEHL, Eberhard, 72768 Reutlingen (DE); COLLANI, Yorck, 71717 Beilstein (DE); GMEHLICH, Rainer, 71254 Ditzingen (DE)
(86) Internationale Anmeldenummer: PCT/EP2006/064730
(87) Internationale Veröffentlichungsnummer: WO 2007/017395

(56) Entgegenhaltungen:
- WO-A-99/66405
- WO-A2-2005/003962
- US-A- 5 572 662

## Beschreibung

### Stand der Technik

Die Erfindung geht aus von einem Verfahren und einer Vorrichtung zum Vergleich zwischen Ausgangsdaten wenigstens zweier Ausführungseinheiten eines Mikroprozessors gemäß den Oberbegriffen der unabhängigen Ansprüche.

Transiente Fehler, ausgelöst durch Alpha-Teilchen oder kosmische Strahlung, werden zunehmend ein Problem für integrierte Schaltungen. Durch abnehmende Strukturbreiten, sinkende Spannungen und höhere Taktfrequenzen nimmt die Wahrscheinlichkeit zu, dass eine Spannungsspitze, hervorgerufen durch ein Alpha-Teilchen oder kosmische Strahlung, einen logischen Wert in einer integrierten Schaltung verfälscht. Ein falsches Berechnungsresultat kann die Folge sein. In sicherheitsrelevanten Systemen müssen daher solche Fehler zuverlässig detektiert werden.

Bei sicherheitsrelevanten Systemen, wie z.B. einem ABS-Regelsystem in einem Kraftfahrzeug, in denen Fehlfunktionen der Elektronik sicher detektiert werden müssen, werden gerade bei den entsprechenden Steuereinrichtungen solcher Systeme üblicherweise Redundanzen zur Fehlererkennung vorgesehen. So ist beispielsweise in bekannten ABS-Systemen jeweils der komplette Mikrocontroller dupliziert, wobei die gesamten ABS-Funktionen redundant berechnet und auf Übereinstimmung geprüft werden. Tritt eine Diskrepanz der Ergebnisse auf, so wird das ABS-System abgeschaltet.

Solche Prozessoreinheiten mit wenigstens zwei integrierten Ausführungseinheiten sind auch als Dual-Core oder Multi-Core Architekturen bekannt. Die verschiedenen Ausführungseinheiten (Cores) führen redundant und taktsynchron das gleiche Programmsegment aus, die Ergebnisse der beiden Ausführungseinheiten werden verglichen, und ein Fehler wird dann bei dem Vergleich auf Übereinstimmung erkannt werden. Multi-Core Rechner sind bereits aus der US5572662 benannt.

### Vorteile der Erfindung

Sollen heutige Dual-Core Prozessoren in einem Vergleichsmodus arbeiten, dann müssen die Cores bzw. die Ausführungseinheiten weites gehend identisch sein, damit die Ausgangssignale in jedem Takt verglichen werden können. Unter Sicherheitsaspekten ist es aber auch vorteilhaft, wenn diversitäre Ausfühnungseinheiten verwendet werden. Sind die Ausführungseinheiten diversitär können aber die Ausgangssignale dieser Ausführungseinheiten nicht mehr in jeden Takt verglichen werden.

Aufgabe dieser Erfindung ist es Ausgangssignale diversitärer Ausführungseinheiten zu vergleichen. Die hier vorgestellte Erfindung löst dieses Problem durch die Einführung eines Steuersignals mit dem eine Ausführungseinheit einer Vergleichseinheit signalisiert, dass das mit diesem Signal ausgegebene Datum mit einem Datum der anderen Ausführungseinheit verglichen werden soll. Es können damit diversitäre Ausführungseinheiten und diversitäre Software verwendet werden. Nur die zu vergleichenden Daten und deren Format muss vergleichbar sein. Von der jeweiligen Implementierung der hier. beschriebenen Erfindung hängt es ab, ob auch die Reihenfolge in der die zu vergleichenden Daten der Vergleichseinheit übermittelt werden müssen identisch sein muss.

Diese Aufgabe wird erfindungsgemäss durch die in den beiliegenden unabhängigen Ansprüche 1 und 8 definierten Merkmalen gelöst.

Vorteilhaft gibt eine Ausführungseinheit der Vergleichseinheit vor, dass das nächste Ausgangsdatum mit einem Ausgangsdatum der wenigstens zweiten Ausführungseinheit verglichen werden soll und darauf ein Vergleich der wenigstens beiden Ausgangsdaten erfolgt. Zweckmäßiger Weise verarbeiten die wenigstens zwei Ausführungseinheiten die Eingangsdaten unabhängig voneinander. Vorteilhaft erfolgt die Vorgabe das das nächste Ausgangsdatum verglichen werden soll durch ein Vergleichssignal. Vorteilhaft werden das Vergleichssignal und das Ausgangsdatum das verglichen werden soll eineindeutig zueinander zuordbar ausgegeben. Zweckmäßigerweise wird dem Datum das verglichen werden soll eine Kennung zugeordnet, durch die der Vergleich ausgelöst wird. Vorteilhaft signalisieren alle Ausführungseinheiten deren Ausgangsdaten verglichen werden sollen, dies der Vergleichseinheit. Zweckmäßigerweise werden die Ausgangsdaten die verglichen werden sollen über wenigstens einen Pufferspeicher in einer vorgebbaren Reihenfolge gepuffert. Vorteilhaft gibt eine Ausführungseinheit der Vergleichseinheit vor, dass das nächste Ausgangsdatum mit einem Ausgangsdatum der wenigstens zweiten Ausführungseinheit verglichen werden soll und darauf ein Vergleich der wenigstens beiden Ausgangsdaten erfolgt. Vorteilhaft ist in der Vorrichtung wenigstens ein Pufferspeicher vorgesehen, der derart ausgebildet ist, dass die Daten in vorgebbarer Reihenfolge gepuffert werden und dann der Vergleichseinheit zugeführt werden können. Vorteilhaft handelt es sich bei dem Pufferspeicher um einen FIFO Speicher. Vorteilhaft wird dies in einer Vorrichtung sowie einem diese Vorrichtung enthaltenden Rechnersystem dargestellt.

Weitere Vorteile und vorteilhafte Ausgestaltungen ergeben sich aus den Merkmalen der Ansprüche sowie der Beschreibung.

### Figuren

- In Figur 1: ist ein Multiprozessorsystem G60 mit zwei Ausführungseinheiten G10a und G10b sowie einer Vergleichseinheit G20 dargestellt.
- In Figur 2: ist eine Ausführungsform einer Vergleichseinheit G20 mit zwei Warteschlan- gen G21a und G21b dargestellt.
- In Figur 3: ist eine Ausführungsform einer Vergleichseinheit G200 mit jeweils zwei Lis- ten G210a, G211a und G210b, G211b dargestellt.

### Beschreibung der Ausführungsbeispiele

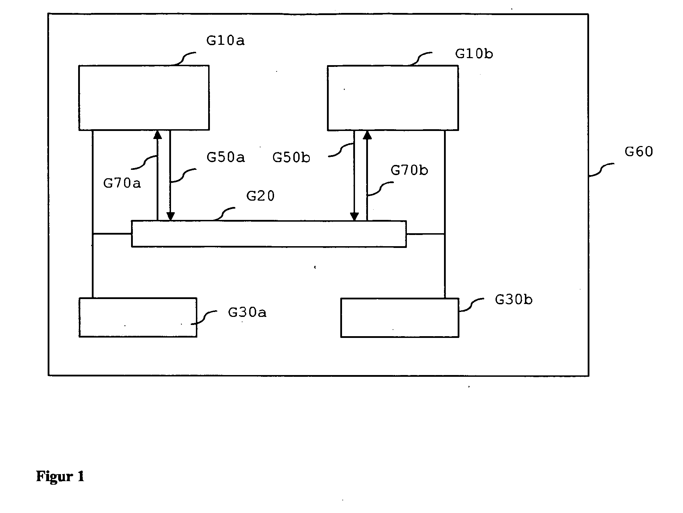

Eine Ausführungseinheit kann im Folgenden dabei sowohl einen Prozessor/Core/CPU, als auch eine FPU (Floating Point Unit), DSP (Digitaler Signalprozessor), Coprozessor oder ALU (A-rithmetic logical Unit) bezeichnen. Die Erfindung bezieht sich auf ein Multiprozessorsystem G60 dargestellt in Figur 1 mit wenigstens zwei Ausführungseinheiten G10a, G10b und einer Vergleichseinheit G20. Jede der Ausführungseinheiten G10a, G10b hat wenigstens einen Ausgang zu entsprechenden Systemschnittstellen G30a, G30b. Über diese Schnittstellen können Register, Speicher oder Peripherals wie Digitale Ausgänge, D/A-Wandler, Kommunikationscontroller angesteuert werden. Die Ausgangssignale der Ausführungseinheiten G10a, G10b können in der Vergleichseinheit G20 verglichen werden. Bei einem Unterschied wird auf einen Fehler erkannt und es können entsprechende Maßnahmen ergriffen werden. Für den Vergleich werden die Ausgangsdaten und/oder Adressen der Ausführungseinheiten herangezogen. Weiteren Steuersignale können einem Vergleich unterzogen werden. Im Folgenden wird unabhängig von den ausgewählten Ausgangssignalen, die vergleichen werden sollen, vom Datum gesprochen, welches mit einem anderen Datum verglichen werden soll.

Figur 1 zeigt eine mögliche Implementierung für ein Multiprozessorsystem G60 mit zwei Ausführungseinheiten G10a und G10b. Aktiviert wird die Vergleichseinheit G20 durch ein Steuersignal G50a, G50b der Ausführungseinheiten G10a, G10b. Will eine Ausführungseinheit G10a, G10b ein Datum an die Systemschnittstelle G30a resp. G30b weiterreichen ohne das dieses verglichen werden soll, so werden diese weitergereicht ohne die Signale G50a, G50b zu setzen. Die Vergleichseinheit G20 wird damit nicht mit diesen Daten befasst. Will eine Ausführungseinheit G10a, G10b ein Datum an die Systemschnittstelle G30a resp. G30b weiterreichen und soll dieses Datum mit einem entsprechenden Datum der anderen Ausführungseinheit G10a, G10b verglichen werden, so wird zusätzlich zu den für einen Datentransfer zur Systemschnittstelle notwendigen Ausgangssignalen der Ausführungseinheit ein Signal G50a bei G10a, G50b bei G10b für die Vergleichseinheit G20 generiert. Diese Signale G50a und G50b werden ebenfalls von den Ausführungseinheiten G10a und G10b erzeugt. Diese signalisieren der Vergleichseinheit G20, dass das zur Systemschnittstelle übertragene Datum, optional mit dazu gehöriger Adresse, mit einem entsprechendem Datum der jeweils anderen Ausführungseinheit verglichen werden soll. Der Vergleich findet dann statt, wenn die andere Ausführungseinheit ebenfalls ein Datum zu ihrer Systemschnittstelle überträgt und dabei der Vergleichseinheit G20 ebenfalls einen auszuführenden Vergleich signalisiert, Das Signal G50a bei G10a, G50b bei G10b für den Vergleich muss nicht notwendigerweise zeitgleich mit der Übertragung des Datums von der Ausführungseinheit generiert werden, aber so dass das Signal eindeutig diesem Datum (inklusive Adresse) zugeordnet werden kann. Über die Signale G70a, G70b ist die Vergleichseinheit G20 in der Lage die Ausführungseinheiten bei bedarf vorübergehend anzuhalten. Dabei wird die Ausführungseinheit G10a über das Signal G70a und die Ausführungseinheit G10b über das Signal G70b angehalten. Die Ausführungseinheiten werden solange angehalten bis die entsprechenden Signale G70a und G70b wieder von der Vergleichseinheit zurückgenommen werden.

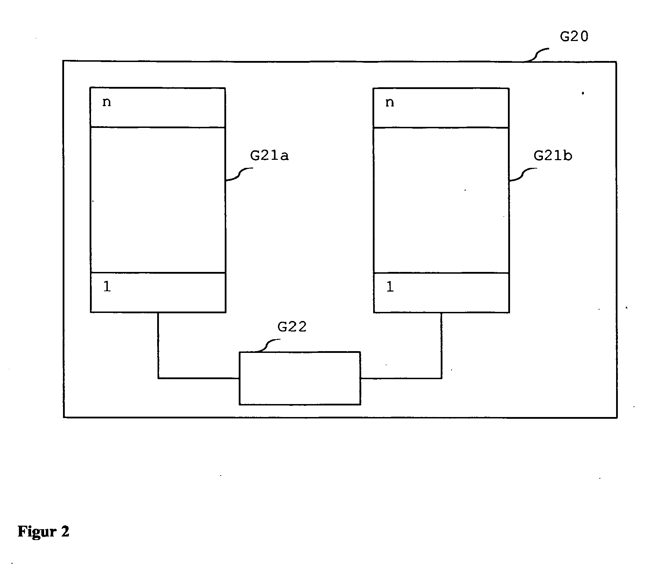

In einer ersten Ausführungsform dargestellt in Figur 2 wird eine mögliche Implementierung der Vergleichseinheit G20 beschreiben. Sie besitzt intern für jede angeschlossene Ausführungseinheit eine Warteschlange. Diese Warteschlangen sind nach dem FIFO Prinzip (First in First out Prinzip) aufgebaut. In dem in Figur 2 gezeigten Implementierungsbeispiel sind dies die Warteschlange G21a für die Ausführungseinheit G10a und die Warteschlange G21b für die Ausführungseinheit G10b. Eine Warteschlange hat n Einträge mindestens aber einen. Wird von einer Ausführungseinheit für ein Datum signalisiert, dass es verglichen werden soll, so wird dieses Datum in der Warteschlange in einem Eintrag gespeichert. Ist in einer Warteschlange kein freier Eintrag mehr vorhanden, wird die dazugehörige Ausführungseinheit über das Signal G70a resp. G70b, dargestellt in Figur 1, angehalten bis wieder ein Eintrag in der Warteschlange frei ist. Alternativ kann die Vergleichseinheit G20 ein Fehlersignal generieren, wenn eine Ausführungseinheit versucht ein weiteres Datum in eine bereits volle Warteschlange einzustellen. Ist in allen Warteschlangen von G20 (hier G21a und G21b) mindestens ein Eintrag vorhanden, werden gemäß dem FIFO Prinzip jeweils die ersten, damit zeitlich gesehen ältesten Einträge miteinander über die Einheit G22 verglichen. Falls die verglichenen Daten sich unterschieden wird ein Fehlersignale generiert und die Einträge danach in den Warteschlangen verworfen d.h. aus diesen entfernt Bei Gleichheit der Daten werden diese ebenfalls aus den Warteschlangen entfernt. Alternativ kann bei mehr als zwei Warteschlangen ein Mehrheitsentscheid getroffen werden (Voting). Gemeinsames Merkmal dieser Ausführungsform ist, dass die zu vergleichenden Daten in identischer Reihenfolge von allen angeschlossenen Ausführungseinheiten geliefert werden müssen, damit sie in der richtigen Reihenfolge in die Warteschlangen einsortiert werden. Welche Daten mit welchen Daten verglichen werden definiert sich nämlich nur über ihre Stellung innerhalb der Warteschlangen. Verglichen werden immer die vordersten bzw. ältesten Einträge innerhalb der Warteschlangen.

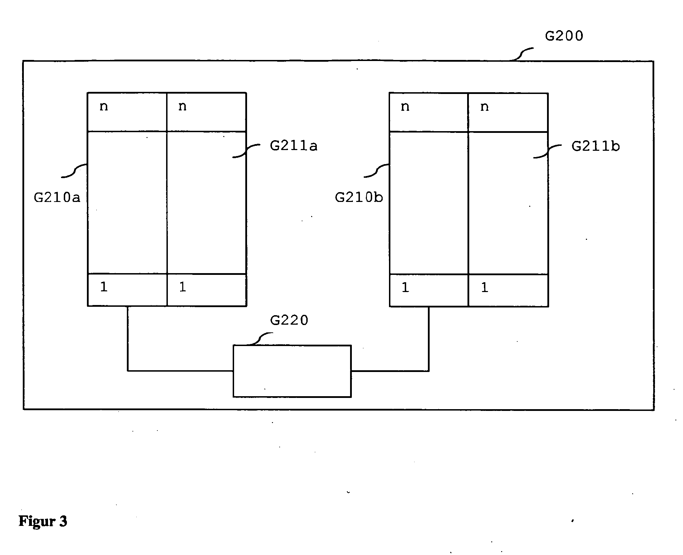

Eine weitere Ausführungsform der Vergleichseinheit G20 wird in der Figur 3 dargestellt, dort als G200 bezeichnet. Die Vergleichseinheit G200 besitzt für jede angeschlossene Ausführungseinheit Listen G210a, G210b in denen das zu vergleichende Datum abgespeichert wird. Zusätzlich zu den Listen G210a, G210b existieren weitere Listen G211a, G211b in denen zu jedem Datum in den Listen G210a, G210b eine eineindeutige ID abgespeichert wird. Ist eine Liste voll wird die jeweilige zugeordnete Vergleichseinheit über die Signale G70a resp. G70b, dargestellt in Figur 1, angehalten oder es wird ein Fehlersignal ausgelöst sollte die Ausführungseinheit versuchen ein weiteres Datum in eine bereits volle Liste einzustellen. Ein Vergleich der Daten fmdet dann statt, wenn in allen Listen G210a, G210b Daten mit dazugehörigen identischen IDs in den Listen G211a, G211b existieren. Die Daten werden verglichen und bei einem Unterschied wird ein Fehlersignal generiert. Bei Gleichheit werden diese an die angeschlossen Systemschnittstellen G30a, G30b oder an G32 falls die Systemschnittstelle der Vergleichseinheit zugeordnet ist, übertragen. Nach einem Vergleich, unabhängig vom Ergebnis werden die Daten aus den Listen G210a, G210b und die zugehörigen ID aus den Listen G211a, G211b entfernt. Existieren mehr als zwei Listen kann alternativ ein Mehrheitsentscheid getroffen werden. Merkmal dieser Implementierung ist, dass die zu vergleichenden Daten nicht in identischer Reihenfdge von allen angeschlossenen Ausfühnungseinheiten an die Vergleichseinheit G20 geliefert werden müssen. Daten werden dann verglichen wenn in beiden Listen G210a und G210b Daten vorliegen und in den ID Listen wenigsten zwei gleiche ID vorliegen.

## Patentansprüche

1. Verfahren zum Vergleich von Daten bei einem Rechnersystem (G60) mit wenigstens zwei Ausführungseinheiten (G10a, G10b), wobei der Vergleich der Daten in einer Vergleichseinheit (G20) erfolgt und jede Ausführungseinheit (G10a, G10b) Eingangsdaten verarbeitet und Ausgangsdaten erzeugt **dadurch gekennzeichnet, dass** eine Ausführungseinheit (G10a, G10b) der Vergleichseinheit vorgibt, dass das nächste Ausgangsdatum mit einem Ausgangsdatum der wenigstens zweiten Ausführungseinheit (G10a, G10b) verglichen werden soll und darauf ein Vergleich der wenigstens beiden Ausgangsdaten erfolgt.

2. Verfahren nach Anspruch 1, **dadurch gekennzeichnet, dass** die wenigstens zwei Ausführungseinheiten (G10a, G10b) die Eingangsdaten unabhängig voneinander verarbeiten.

3. Verfahren nach Anspruch 1, **dadurch gekennzeichnet, dass** die Vorgabe das das nächste Ausgangsdatum verglichen werden soll durch ein Vergleichssignal erfolgt.

4. Verfahren nach Anspruch 3, **dadurch gekennzeichnet, dass** das Vergleichssignal und das Ausgangsdatum das verglichen werden soll eineindeutig zueinander zuordbar ausgegeben werden.

5. Verfahren nach Anspruch 4, **dadurch gekennzeichnet, dass** dem Datum das verglichen werden soll eine Kennung zugeordnet wird, durch die der Vergleich ausgelöst wird.

6. Verfahren nach Anspruch 1, **dadurch gekennzeichnet, dass** alle Ausführungseinheiten (G10a, G10b) deren Ausgangsdaten verglichen werden sollen, dies der Vergleichseinheit (G20) signalisieren.

7. Verfahren nach Anspruch 1, **dadurch gekennzeichnet, dass** die Ausgangsdaten die verglichen werden sollen über wenigstens einen Pufferspeicher in einer vorgebbaren Reihenfolge gepuffert werden.

8. Vorrichtung zum Vergleich von Daten bei einem Rechnersystem (G60) mit wenigstens zwei Ausführungseinheiten (G10a, G10b) und einer Vergleichseinheit (G20), wobei der Vergleich der Daten in der Vergleichseinheit (G20) erfolgt und jede Ausführungseinheit (G10a, G10b) Eingangsdaten verarbeitet und Ausgangsdaten erzeugt, **dadurch gekennzeichnet, dass** eine Ausführungseinheit (G10a, G10b) der Vergleichseinheit (G20) vorgibt dass das nächste Ausgangsdatum mit einem Ausgangsdatum der wenigstens zweiten Ausführungseinheit (G10a, G10b) verglichen werden soll und darauf ein Vergleich der wenigstens beiden Ausgangsdaten erfolgt.

9. Vorrichtung nach Anspruch 9, **dadurch gekennzeichnet, das** in der Vorrichtung wenigstens ein Pufferspeicher vorgesehen ist, der derart ausgebildet ist, dass die Daten in vorgebbarer Reihenfolge gepuffert werden und dann der Vergleichseinheit zugeführt werden können.

10. Vorrichtung nach Anspruch 10, **dadurch gekennzeichnet, dass** es sich bei dem Pufferspeicher um einen FIFO Speicher handelt.

11. Rechnersystem mit einer Vorrichtung nach Anspruch 9.

## Claims

1. Method for comparing data in a computer system (G60) having at least two execution units (G10a, G10b), the data being compared in a comparison unit (G20), and each execution unit (G10a, G10b) processing input data and generating output data, **characterized in that** one execution unit (G10a, G10b) stipulates to the comparison unit that the next output data item should be compared with an output data item from the at least second execution unit (G10a, G10b) and the at least two output data items are then compared.

2. Method according to Claim 1, **characterized in that** the at least two execution units (G10a, G10b) process the input data independently of one another.

3. Method according to Claim 1, **characterized in that** the stipulation that the next output data item should be compared is given using a comparison signal.

4. Method according to Claim 3, **characterized in that** the comparison signal and the output data item which should be compared are output in such a manner that they can be assigned to one another on a one-to-one basis.

5. Method according to Claim 4, **characterized in that** the data item which should be compared is assigned an identifier which initiates the comparison.

6. Method according to Claim 1, **characterized in that** all execution units (G10a, G10b) whose output data should be compared signal this to the comparison unit (G20).

7. Method according to Claim 1, **characterized in that** the output data which should be compared are buffered in a predefinable order using at least one buffer.

8. Device for comparing data in a computer system (G60) having at least two execution units (G10a, G10b) and a comparison unit (G20), the data being compared in the comparison unit (G20), and each execution unit (G10a, G10b) processing input data and generating output data, **characterized in that** one execution unit (G10a, G10b) stipulates to the comparison unit (G20) that the next output data item should be compared with an output data item from the at least second execution unit (G10a, G10b) and the at least two output data items are then compared.

9. Device according to Claim 9, **characterized in that** at least one buffer is provided in the device, which buffer is designed in such a manner that the data can be buffered in a predefinable order and can then be supplied to the comparison unit.

10. Device according to Claim 10, **characterized in that** the buffer is a FIFO memory.

11. Computer system having a device according to Claim 9.

## Revendications

1. Procédé de comparaison de données dans un système informatique (G60) qui présente au moins deux unités d'exécution (G10a, G10b),
la comparaison des données s'effectuant dans une unité de comparaison (G20) et chaque unité d'exécution (G10a, G10b) traitant des données d'entrée et formant des données de sortie,
**caractérisé en ce que**
une unité d'exécution (G10a, G10b) prescrit à l'unité de comparaison que la donnée de sortie suivante doit être comparée à une donnée de sortie de la deuxième des autres unités d'exécution (G10a, G10b) et
**en ce que** les deux ou plusieurs données de sortie sont ensuite comparées.

2. Procédé selon la revendication 1, **caractérisé en ce que** les deux ou plusieurs unités d'exécution (G10a, G10b) traitent des données d'entrée indépendamment les unes des autres.

3. Procédé selon la revendication 1, **caractérisé en ce que** la prescription que la prochaine donnée de sortie doit être comparée s'opère par un signal de comparaison.

4. Procédé selon la revendication 3, **caractérisé en ce que** le signal de comparaison et la donnée de sortie qui doit être comparée sont délivrés de manière à pouvoir être associés l'un à l'autre de manière univoque.

5. Procédé selon la revendication 4, **caractérisé en ce qu'**une caractérisation qui est déclenchée par la comparaison est associée à la donnée qui doit être comparée.

6. Procédé selon la revendication 1, **caractérisé en ce que** toutes les unités d'exécution (G10a, G10b) dont les données de sortie doivent être comparées signalent cette situation à l'unité de comparaison (G20).

7. Procédé selon la revendication 1, **caractérisé en ce que** les données de sortie qui doivent être comparées sont tamponnées en succession prédéterminée à l'aide d'au moins une mémoire tampon.

8. Dispositif de comparaison de données dans un système informatique (G60) qui présente au moins deux unités d'exécution (G10a, G10b) et une unité de comparaison (G20),
la comparaison des données s'effectuant dans l'unité de comparaison (G20) et chaque unité d'exécution (G10a, G10b) traitant des données d'entrée et formant des données de sortie,
**caractérisé en ce que**
une unité d'exécution (G10a, G10b) prescrit à l'unité de comparaison (G20) que la donnée de sortie suivante doit être comparée à une donnée de sortie de la deuxième ou des autres unités d'exécution (G10a, G10b), les deux données de sortie étant ensuite comparées.

9. Dispositif selon la revendication 9, **caractérisé en ce que** le dispositif présente au moins une mémoire tampon configurée de telle sorte que les données tamponnées en succession prédéterminée peuvent ensuite être amenées à l'unité de comparaison.

10. Dispositif selon la revendication 10, **caractérisé en ce que** la mémoire tampon est une mémoire FIFO.

11. Système informatique doté d'un dispositif selon la revendication 9.
